# EUROPEAN PATENT SPECIFICATION

(11) **EP 1 335 267 B1**
(45) Date of publication and mention of the grant of the patent: **21.11.2007**
(21) Application number: 03396010.5
(22) Date of filing: 30.01.2003
(51) Int. Cl.: G06F 1/00

(54) **Method and system for accessing digital content in a terminal**
Verfahren und System zum Zugang zu digitalem Inhalt in einem Endgerät
Procédé et système d'accès à des données numériques dans un terminal

(30) Priority: 04.02.2002 FI 20020217
(43) Date of publication of application: 13.08.2003
(73) Proprietor: Nokia Corporation, 02150 Espoo (FI)
(72) Inventor: Suutarinen, Jari, 33900 Tampere (FI)
(74) Representative: Pursiainen, Timo Pekka

(56) References cited:
- EP-A- 0 986 275
- US-A- 5 659 595
- US-A- 6 035 403
- US-A- 6 141 652
- US-B1- 6 223 291

## Description

The present invention relates to a method for using a digital record in a terminal in which access rights are acquired in order to use the digital record, wherein a message is formed in the terminal to register the payment for the access rights, which message is transmitted to a predetermined recipient, and that said recipient examines the transmitted message, wherein on the basis of the examination the payment data relating to the access rights is registered. The invention also relates to a terminal comprising means for using a digital record, means for forming a message for acquiring access rights to a digital record, and means for sending said message for acquiring the access rights to a predetermined recipient that is arranged to be responsible for registering the payment data relating to the access rights.

In this description, the term digital record refers to such data groups in digital format, which can be loaded to a terminal and processed in a terminal, especially to copyrighted works that can be stored in digital format. As examples it is possible to mention all kinds of standalone or client-server applications such as computer programs, music stored in digital format, digital books (e-books) and entrance tickets. Although hereinbelow in this description, applications are used as examples of a digital record, it is also possible to apply the invention in connection with other digital records, for the use of which a payment is charged.

There are known applications which can be used in the terminal after an access right has been acquired for the application. In systems of prior art such an access right can be acquired for example in such a manner that the user loads an application via a data network to the terminal. In the same context the user gives his/her contact data, wherein the application provider sends information necessary for opening the access right for example via mail. The user can pay for the access right of the application advantageously in connection with the loading by giving his/her credit card number. Thus, the payment is charged through a credit card company. On the other hand, the payment can also be collected on delivery, wherein the user makes the payment when he/she claims the access right data sent via mail. It is possible to start using the application after the user has entered the access right data he/she has received. Such data may include for example a user identification and a password, a registration code, etc. Advantageously the access rights contain information on the identification of the user's terminal or another individualizing information, by means of which different users are prevented from using the same application with the access rights of one user.

One problem in the solution of the above kind is for example that it is not possible to start using the application immediately after the loading, but the user must wait for the access rights to arrive. This can take several days, and it may decrease the users' interest for the application in question. The user can also be reluctant to acquire the application if he/she does not have more specific information on the application in question. To eliminate this problem, so-called demo versions have been developed, which the user can use for example for a set period of time, whereafter it is no longer possible to use the application unless the user acquires the access rights. On the other hand, the properties of such a demo version may be restricted, wherein the user cannot test all the features of the application by means of this demo version. Another possibility is that the utilization time and/or the number of instances of use of the application are restricted. In this case the user can use the application normally until the free utilization time has expired or the number of free instances of use has been reached. Thereafter the user must acquire the access rights to continue the use of the application. Applications have also been developed in which the payment is voluntary (shareware). Free use of such applications has not been directly prevented, even if the user did not make the payment.
In some cases such applications have been supplemented with such a feature that prevents the use of the application for example when a set time limit has expired, or when the number of instances of use has reached the maximum number set for the application.

The document US-6,141,652 relates to a method for operating an apparatus for value, especially for using a software program in the apparatus and charging the use of the program. The program is stored in the apparatus and the program is arranged to perform a security check by transmitting a signal and only continuing to operate when a corresponding encoded signal is received back. The method provides a means to charge the use of the program when it is first used, or periodically during use, or on use of a particular functions. In other words, the use of the program is charged but not for the downloading of the program.

One drawback of the above-described solutions of prior art is also that it is relatively difficult to pay for the use of the applications, and on the other hand, the user does not necessarily want to give the number of his/her credit card via a communication connection. On the other hand, the complex payment transaction of the access rights may result in that the level of use of the applications remains low, wherein the compensation for the use obtained by the producer of the application may be small when compared for example to the costs caused by product development, production and marketing.

It is an aim of the present invention to provide an improved method and system for the use of applications. The invention is based on the idea, that the payment transaction for the access rights of applications is conducted by establishing a connection to a set address by means of a terminal, wherein the information necessary for the payment transaction relating to the access right of the application is registered. The registering of the payment may involve an authorization message which is advantageously sent to the terminal in which the application is used. On the basis of the authorization message the application can verify the registering of the payment and when the verification indicates that the payment has been registered appropriately, the application can be used in the manner provided by the access rights according to the payment. On the basis of the registration data the payment can be conducted in such a manner that the user pays an invoice sent to the user by the telecommunication service provider.

The invention is defined by the appended independent claims.

The present invention shows significant advantages over solutions of prior art. By means of the method according to the invention it is possible to pay for the access rights of applications in significantly more easily when compared to solutions of prior art. This may, for its part, increase the number of people that acquire access rights for applications. Furthermore, in connection with their applications, the producers of applications can easily implement the functions necessary for charging the users of the applications for the access rights. Thus, it is not necessary for the producers of the applications to separately receive, handle and send correspondence and conduct other actions relating to the access rights. By means of the method according to the invention it is possible to arrange the payment of the access rights largely into an automatic process. It is also possible to handle the access rights rapidly, wherein the user can obtain the access right to the desired digital record very quickly, even substantially immediately after the transmission of the message. Furthermore, to obtain an access right to a digital record, it is not necessary for the user to transmit any confidential information with the message, such as the number of his/her credit card. Thus, the risk that a third party gains access to confidential information or this information is otherwise misused is smaller than in solutions of prior art. The system according to a preferred embodiment of the invention can be largely implemented by means of a program in already existing systems, wherein it is not necessary to install new devices either. Another advantage is that existing message systems subject to a charge, such as the short message service, as well as the invoicing systems developed for the same can be utilized in connection with the present invention.

In the following, the invention will be described in more detail with reference to the appended drawings, in which
- Fig. 1: shows a system according to a preferred embodiment of the invention in a reduced chart,
- Fig. 2: shows a terminal according to a preferred embodiment of the invention in a reduced block chart, and
- Fig. 3: shows, in a reduced manner, some functions of an operating system of a terminal according to a preferred embodiment of the invention.

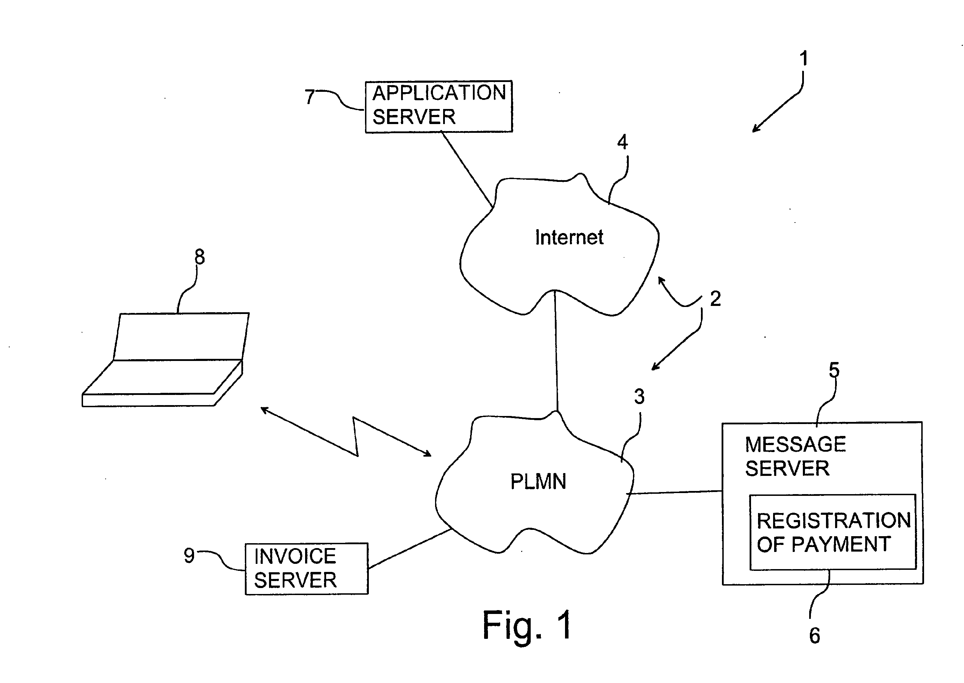

Figure 1 shows a system according to a preferred embodiment of the invention in a reduced manner. The system 1 comprises a data transmission network 2 which can be composed of one or several separate data transmission networks, such as a mobile communication network 2 and/or the Internet data network. The mobile communication network 3 is, for example, a GSM cellular network or a UMTS cellular network, but it is obvious that the invention is not restricted solely to said data transmission networks. The system also comprises one or more message servers 5, provided with payment recording means 6 for recording payments relating to the access rights of the applications. In a preferred embodiment of the invention it is possible to use for example a short message server 3 of the mobile communication network as a message server. The system advantageously also comprises one or several application servers 7 in which applications have been stored and from which it is possible to load applications to a terminal 8. The application server can be for example the server of the application producer, the server of a dealer, the server of a service provider in a data transmission network, or a corresponding server. The application server is arranged to communicate with the data transmission network 2 for example to load applications to a terminal 8. It is obvious that applications can also be loaded to the terminal 8 in another manner, for example with a transferable storage means, such as a diskette, a FLASH memory card or the like. Applications can be stored in the terminal 8 also in connection with the manufacture, storage and/or sales of the terminal 8. The system according to Fig. 1 also comprises an invoice server 9 which contains information for invoicing relating to the access rights of data transmission services, such as mobile communication services, and applications used by different users. Although in Fig. 1 the message server 5, the application server 7 and the invoice server 9 are shown as separate services, it is obvious that the functions of the same can also be combined in the same server. In the preferred embodiments disclosed in this description, it is, however, assumed that they are separate servers.

In the system, it is possible to transfer information between the terminal 8 and at least the message server 5 and advantageously also the application server 7.

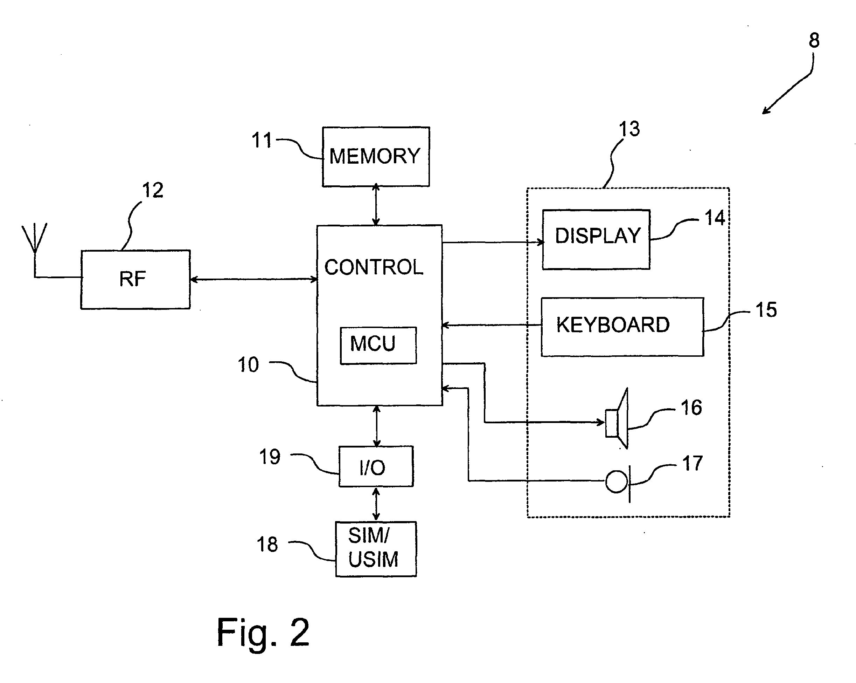

Fig. 2 shows the terminal 8 according to a preferred embodiment of the invention in a reduced block chart. The terminal 8 is for example a portable communication device, such as Nokia 9210 Communicator, a wireless communication device or a portable computer comprising communication means, such as a modem. A computer to which a wireless terminal is coupled by means of a data card or the like is also suitable to be used as a terminal 8. The present invention is not, however, restricted solely to the above-mentioned terminals, but it is possible to use any electronic device comprising communication means, advantageously means for transmitting short messages as a terminal 8. The terminal 8 comprises a control block 10 containing one or more processors (MCU, Micro Controller Unit). Furthermore, the terminal contains memory means 11, which advantageously comprise read only memory (ROM), of which at least a part can be non-volatile read only memory, and random access memory (RAM). For the data transmission purposes the terminal 8 is provided with data transmission means, such as mobile communication means 12. For the control of the terminal there is a user interface 13 containing a display, a keyboard 15 and/or other means for entering data, an earpiece/a speaker 16 and a microphone 17.

The terminal 8 can be provided with an identification individualizing the terminal, such as an international mobile equipment identity IMEI. An identification card 18 of the user, such as a SIM card (Subscriber Identity Module) or a USIM card (UMTS-Subscriber Identity Module) is advantageously also coupled to the terminal 8 via card interface means 19. In the user identification card 18 user information, such as an International Mobile Subscriber Identity IMSI is stored.

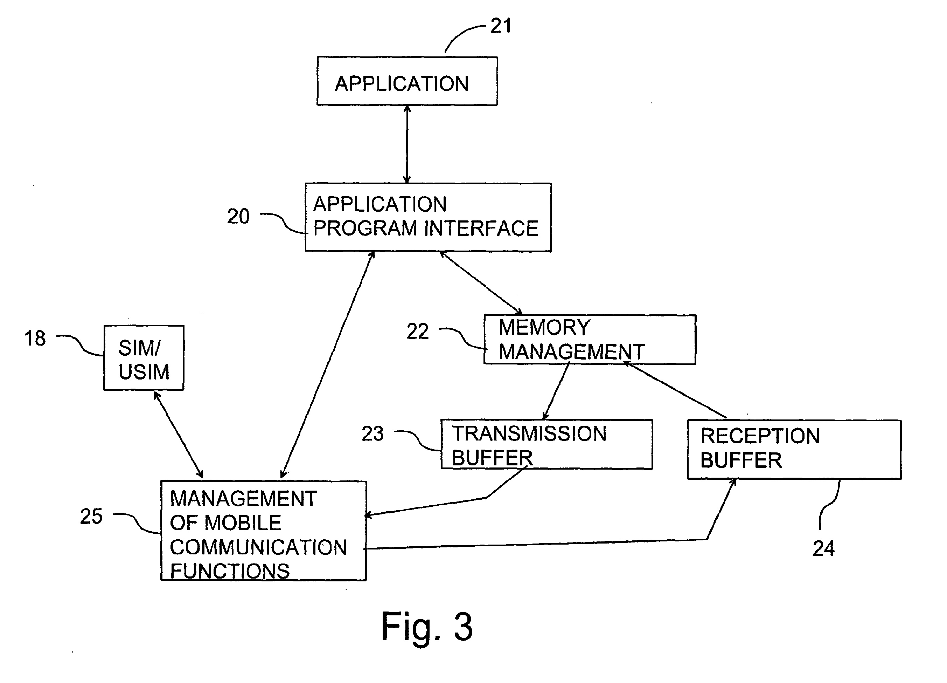

The terminal 8 is advantageously provided with an operating system, such as Symbian OS, which is executed by the processor of the control block 10 to control the operation of the terminal 8. By means of the operating system the execution of the applications is also controlled in the terminal 8 in a manner known as such. Fig. 3 illustrates some blocks of such an operating system in a reduced manner. The figure shows one application 21, but it is obvious that there may be several applications stored in the terminal 8 as well. The operating system is equipped with a so-called application program interface 20 by means of which it is possible to transfer information between the application 21 and the different functional blocks of the terminal 8. In the terminal 8 according to this preferred embodiment, the transfer of data between the operating system and the memory means 11 and the applications and the memory means 11 is conducted by means of memory management 22. The transfer of data can be arranged for example by means of message buffers, of which a transmission buffer 23 and a reception buffer 24 are shown as examples in Fig. 3. Furthermore, the operating system may contain a control block 25 for mobile communication functions, which is advantageously used in mobile communication functions and also for example for reading of the information of the user identification card, if necessary. The operating system also contains other functions, a more detailed description of which is not, however, necessary in this context. It is also obvious that the arrangement of Fig. 3 is only an example for implementing an application program interface to transmit information between the application and other functions.

In the following, the operation of the method according to a preferred embodiment of the invention will be described. It is assumed that the user wishes to load such an application to his/her terminal 8, the use of which is subject to a charge. The charge may be bound for example to the number of instances of use, the time of use, calendar time or operating levels. The user utilizes his terminal 8 to communicate with the data transmission network 2 for example via a mobile communication network 3. This is performed in a way known as such by means of the mobile communication means 12 of the terminal 8. The user activates for example a WAP browser in the terminal 8 and moves on to browse the home page of the producer of the application, which is formed for example in an application server 7, and searches for information on the desired application from said server. Thereafter, by selecting for example a download function, the loading of the application is started to the terminal 8 via the data transmission network 2. In the terminal 8 the application is received and stored in the memory means 11.

When the application has been loaded, the transmission of payment data begins, taking place advantageously by starting the application. Thus, the application preferably informs the user that a payment must be made to gain the access rights to the application. The amount of this payment may vary in different applications and different access rights of the application. The application can also present information on the display on the amounts of charges of different access rights, wherein the user can for example by means of the keyboard 15 select the desired alternative or cancel the process of acquiring the access rights. In some applications it is possible to provide the user with an unrestricted free access right, wherein it is possible for the user to familiarize himself/herself with the application. If the user has selected an access right subject to a charge, the application can still check with the user that the payment can be made. When the user has accepted this, actions relating to the registration of the payment of the selected access rights begin. In this preferred embodiment of the invention this takes place in such a manner that a predetermined recipient is selected for the application in question, to which a message, subject to a charge, is sent from the terminal 8. Information on the address of this recipient is advantageously stored in the application. When the short message service is used for the transmission of the message, the address is advantageously a series of numbers, which is the number of the message service center (text message center) to which the message is to be transmitted. In this example the number of the message service center formed in the message server 5 is used. This address advantageously indicates the message server 5 of the mobile communication service provider with which the user has a subscriber contract, but it can also indicate another location in the data transmission system, for example the application server 7. In this preferred embodiment the address is also stored in the terminal 8, advantageously in the identification card 18 of the user. Thus, before the message is transmitted, it is possible to make sure that the address data stored in the terminal 8 corresponds to the address data stored in the application. This is advantageously conducted in such a manner that the application inquires the address stored in the terminal 8 via the application program interface 20. The operating system reads this address either from the identification card of the user 18, for example via the control block 25 of the mobile communication functions, or from the memory means 11 via the memory management block 22 and transmits the address via the application program interface 20 to the application 21. Thereafter the application 21 can compare the address data of its own to the address data stored in the identification card 18 of the user. This check prevents the application from transmitting a message subject to a charge to the message server 5 of another mobile communication service provider, if the user has changed a user identification card given by another mobile communication service provider into the terminal. If the checking shows that the address data correspond to each other, it is possible to start the transmission of the message. Otherwise the message is not transmitted and access rights are not given to the user.

The message used in the payment transaction of the access rights of the application is transmitted via the application program interface 20 to the operating system, in which the message is transmitted to the mobile communication functions 12 of the mobile communication network 3 to be transmitted for example as a short message. The transmission of the message to the mobile communication network 3 is conducted with the mobile communication means 12 in a manner known as such.

By means of the message transmission mechanisms of the mobile communication network 3 the message is transmitted to the message server 5 in which the message is received and the information relating to the sender of the message is examined. This information is used in the invoicing of the message. Thereafter the costs resulting from the message are registered, in other words the costs are added to the invoice data of the user who has sent the message. The mobile communication service provider transmits a message to the user at intervals, in which all the payment transactions recorded so far have been taken into account. The user pays the invoice to a bank account given by the mobile communication service provider, which is typically the bank account of the mobile communication service provider. The mobile communication service provider has made a contract with the producer of the application or another owner of the rights of the application, and according to the contract the mobile communication provider pays a part of the payment received for the message to said producer of the application, to the owner of the dealership rights or to another party responsible for the access rights of the application. In different areas, for example in different countries and/or states a different community may be responsible for the access rights of the application, but this fact is not significant as such for the purposes of this invention. Thus, by means of the above-mentioned arrangement it is possible to easily collect the payment for the access rights of the application and transmit the payment to the recipient in a relatively simple manner.

If messages of fixed price are used in the system, it is possible to store different access right payments for example in such a manner that instead of one message subject to a charge, several messages subject to a charge are transmitted. Thus, several messages constitute a larger sum to be paid by the user. Part of this payment is transmitted to the party responsible for the access rights of the application, which party thus obtains a larger compensation when compared to a situation in which only one message of a fixed price is transmitted. On the other hand, in systems where messages of different prices can be used, it is possible to select a message of a different price for different payments. One possibility is also that the registration means 6 of the message server 5 are used for examining the message to find out the information relating to the application and/or to the access right reserved for the same, and a database or the like is examined to find out the price to be charged from the user. Thus, the message server 5 can add the price to be charged to the price possibly charged for the message to the invoice data of the user.

In this system according to a preferred embodiment of the invention the application can give the access rights complying with the payment substantially immediately after the message has been transmitted from the terminal 8. Thus, the delays possibly occurring in the transmission of the message do not delay the starting of the use of the application. In some cases the access rights can be given already at that stage when the message has been transferred from the application to the operating system, before the message is transmitted.

In the system according to a second preferred embodiment of the invention, the application must receive an authorization message to obtain the access rights, before the use of the application complying with the access rights according to the payment can be started. Thus, when the message server 5 has received and processed the message subject to a charge that is transmitted from the terminal 8, an authorization message (acknowledgement message) is advantageously formed in the message server 5 and transmitted to the terminal 8. The authorization message indicates that a message subject to a charge has been transmitted from the terminal 8, the message has reached its destination and it has been registered. In this authorization message it is possible to transmit information on the message subject to a charge that has been received in the message server, such as the time data contained in the message subject to a charge. This time data is transmitted to an application in the terminal 8 which can use this time data, if necessary, as a basis for the point of time when the time-based access right begins. The authorization message is not necessarily transmitted from the message server 5, but the message server can transmit information on the payment of the access rights to another server, such as the application server 7, from which the authorization message is transmitted to the terminal 8.

In a third preferred embodiment of the invention, in which an authorization message is used, it is possible to give the user a restricted right to use the application already at the stage of transmitting the message, wherein the access rights complying with the payment are set for the application at that stage when the authorization message is received in the terminal 8 and transmitted to the application. Thus, possible delays from the transmission of the message to the reception of the authorization message do not prevent the starting of the use of the application. The restricted right can be for example such that some properties of the application are not available or access rights complying with the payment are available for a temporally restricted period of time. This time limit is advantageously selected to be such that the authorization message typically has time to arrive in the terminal 8 before the time limit expires.

In the message transmitted from the terminal 8 it is possible to transmit information on the application and/or identification data of the terminal 8 in addition to the identification data of the user. The content of the message may vary in different systems and applications. The application collects the necessary information in the message, part of which information can be given by the user, for example a name or a user identification. If terminal-specific information or other information contained in the terminal 8 is required in the message, this information can be transmitted to the application via an application program interface 20 in which the information is connected to the message. The terminal-specific information can be for example the international mobile equipment identity IMEI. The message can also contain the international mobile subscriber identification IMSI.

In the message server 5 it is possible to use the identification data contained in the message for example to register the access rights of the application and to transmit them to the producer of the application, if necessary. Identification data and possibly other verification data can be connected to the authorization message, wherein the application can make sure that the authorization message is the correct authorization message. The authorization message is transmitted in encrypted format, if necessary. One purpose of this arrangement is to prevent free use of the application in such a manner that a false authorization message would be transmitted to the terminal 8.

Different applications may have different access rights. On the other hand, even in the same application it may be possible to select different access rights which can be differently priced as well. For example, it may be possible to select different times of use for the application, for example a week, a month, a year, or the user can select the number of instances of use by paying a price corresponding to the selected number of instances of use. In some applications there may be different operating levels, functions, levels of difficulty, etc. Thus, the access right can be selected according to the operating level of the application that the user wishes to use. For example in many game applications the user can select different levels of difficulty. It is possible to apply the invention also for the payment of a regional access right to the application. As an example it is possible to mention provincial and state-specific use. Thus, a weather application can obtain information on the weather in a particular area, and in a corresponding manner, a road service application can obtain information for example on the road work situation in a particular area, etc.

Different kind of pricing of the access rights can be arranged in a number of different ways, of which the number of messages and the use of messages of different prices has already been mentioned hereinabove. Another possibility to acquire access rights at different prices is that several different addresses have been arranged to which messages can be sent. Thus, the address is selected according to the access right desired for the application. In this arrangement the application contains information on the addresses corresponding to different access rights, wherein the application selects the address corresponding to the selection and transmits it to the mobile communication means 12. In this case the application cannot conduct a comparison of the addresses, if the selected address has not been stored in the terminal 8. Thus, to verify the access rights, the application waits for an authorization message for example from the message server 5.

By means of the message server 5 it is possible to charge a different price for messages transmitted to different addresses, if different access rights have different prices. On the other hand, even when different addresses are used, the pricing can implemented in such a manner that more than one message of a fixed price is transmitted, if necessary.

The invention can be applied in connection with different kinds of applications. The applications can be for example games, database applications, data retrieval applications, word processing applications, weather service applications, etc. The way in which the applications are implemented is not restricted to a set programming language within the scope of the present invention either, but the applications may be Java applications (Java-applet, Java-midlet) etc. It is, however, obvious that in connection with different kinds of applications it may be necessary to use for example a different application program interface 20, which for example in the above-mentioned case of the Java applications may be a Java interface.

Although short messages and a mobile communication network 3 are used as examples in connection with the above description of preferred embodiments of the invention, it is obvious that the invention is not restricted solely to be used in such connections. The invention can also be applied for example in Internet data networks, wherein the address used in the transmission of the message can be for example an IP address.

One example that can be mentioned is the use of e-mail as a message subject to a charge. Thus, an e-mail is transmitted to a set address, wherein for example an e-mail service provider registers the transmission price of the e-mail or a corresponding cost in the payment data of the sender. Part of this payment is directed to the e-mail service provider and a part can be directed to the owner of the rights of the application for example in accordance with an agreement made by the e-mail service provider and the owner of the access rights.

The present invention can be implemented, to a large extent, as a program in existing systems and terminals. It is also possible to utilize existing invoicing systems in the invention.

## Claims

1. A method for using a digital record (21) in a terminal (8) in which method access rights are acquired to use the digital record (21), wherein a message is formed in the terminal (8) to register the payment for the access rights, which message is transmitted to a predetermined recipient, and that said recipient examines the transmitted message, wherein on the basis of the examination the payment data relating to the access rights is registered, **characterized in that** information on the address of said recipient is stored in the digital record (21) and in the terminal (8) and that the address data stored in the terminal (8) is compared to the address data stored in the digital record (21) in the terminal (8) before said message is transmitted, wherein, if the comparison indicates that the compared address data correspond to each other, the digital record (21) can be used after the transmission of said message, and if the comparison indicates that the compared address data do not correspond to each other, access rights are not given for using the digital record (21) in the terminal (8) and said message is not transmitted.

2. The method according to claim 1,**characterized in that** an authorization message of the registration of the message is transmitted from said recipient to said terminal, wherein the digital record can be used with access rights complying with the payment after the reception of said authorization message.

3. The method according to claim 1 or 2, **characterized in that** said message is a short message.

4. The method according to claim 1 or 2, **characterized in that** said message is a paging message.

5. The method according to any of the claims 1 to 4, **characterized in that** the digital record includes one of the following:
- application,
- music stored in digital format,
- work stored in digital format, or
- an entrance ticket stored in digital format.

6. A terminal comprising means for using a digital record, means for forming a message for acquiring the access right to the digital record (21), and means (12) for sending said message for acquiring the access rights to a predetermined recipient that is arranged to be responsible for registering the payment data relating to the access rights, **characterized in that** the address data of the recipient is stored in the digital record (21) and in the terminal (8) and that the terminal (8) comprises means (10) for comparing the stored address data to the address indicated by the address data of the recipient stored in the digital record before said message is transmitted, wherein, if the comparison indicates that the compared address data correspond to each other, the digital record (21) can be used after the transmission of said message, and if the comparison indicates that the compared address data do not correspond to each other, access rights are not given for using the digital record (21) in the terminal (8) and said message is not transmitted.

7. The terminal according to claim 6, **characterized in that** the terminal (8) also comprises means (12) for receiving an authorization message relating to the registration of the payment, and means (10) for giving access rights to the digital record (21) on the basis of said received authorization message.

8. The terminal according to claim 7, **characterized in that** the terminal (8) is provided with an application program interface (20) for the transfer of address data and messages between the terminal (8) and the digital record (21).

## Patentansprüche

1. Verfahren zum Benutzen einer digitalen Aufzeichnung (21) in einem Endgerät (8), bei dem Zugriffsrechte erworben werden, um die digitale Aufzeichnung (21) zu benutzen, wobei in dem Endgerät (8) eine Nachricht zum Registrieren der Zahlung für die Zugriffsrechte ausgebildet wird, wobei die Nachricht an einen vorbestimmten Empfänger übertragen wird und der Empfänger die übertragene Nachricht prüft, wobei auf Grundlage der Prüfung die Zahlungsdaten bezüglich der Zugriffsrechte registriert werden, **dadurch gekennzeichnet, dass** die Information zu der Adresse des Empfängers in der digitalen Aufzeichnung (21) und in dem Endgerät (8) gespeichert wird und dass die in dem Endgerät (8) gespeicherten Adressdaten mit dem in der digitalen Aufzeichnung (21) in dem Endgerät (8) gespeicherten Adressdaten verglichen werden, bevor die Nachricht übertragen wird, wobei, wenn der Vergleich anzeigt, dass die verglichenen Adressdaten einander entsprechen, die digitale Aufzeichnung (21) nach der Übertragung der Nachricht benutzt werden kann, und wenn der Vergleich anzeigt, dass die verglichenen Adressdaten einander nicht entsprechen, Zugriffsrechte zum Benutzen der digitalen Aufzeichnung (21) in dem Endgerät (8) nicht vergeben werden und die Nachricht nicht übertragen wird.

2. Verfahren nach Anspruch 1, **dadurch gekennzeichnet, dass** eine Autorisierungsnachricht der Registrierung der Nachricht von dem Empfänger an das Endgerät übertragen wird, wobei die digitale Aufzeichnung mit Zugriffsrechten entsprechend der Zahlung nach dem Empfang der Autorisierungsnachricht benutzt werden kann.

3. Verfahren nach einem der Ansprüche 1 oder 2, **dadurch gekennzeichnet, dass** die Nachricht eine Kurznachricht ist.

4. Verfahren nach einem der Ansprüche 1 oder 2, **dadurch gekennzeichnet, dass** die Nachricht eine Paging-Nachricht ist.

5. Verfahren nach einem der Ansprüche 1 bis 4, **dadurch gekennzeichnet, dass** die digitale Aufzeichnung eines der folgenden enthält:
- Anwendung
- in digitalem Format gespeicherte Musik
- in digitalem Format gespeicherte Arbeit
- eine in digitalem Format gespeicherte Eintrittskarte.

6. Endgerät, umfassend Mittel zum Benutzen einer digitalen Aufzeichnung, Mittel zum Ausbilden einer Nachricht zum Erwerben der Zugriffsrechte auf die digitale Aufzeichnung (21) und Mittel (12) zum Senden der Nachricht zum Erwerben der Zugriffsrechte an einen vorbestimmten Empfänger, der zur Zuständigkeit für das Registrieren der Zahlungsdaten bezüglich der Zugriffsrechte angeordnet ist, **dadurch gekennzeichnet, dass** die Adressdaten des Empfängers in der digitalen Aufzeichnung (21) und dem Endgerät (8) gespeichert sind, und dass das Endgerät (8) Mittel (10) zum Vergleichen der gespeicherten Adressdaten mit der Adresse, die durch die Adressdaten des Empfängers, welche in der digitalen Aufzeichnung gespeichert sind, angezeigt sind, umfasst, bevor die Nachricht übertragen wird, wobei, wenn der Vergleich anzeigt, dass die verglichenen Adressdaten einander entsprechen, die digitale Aufzeichnung (21) nach der Übertragung der Nachricht benutzt werden kann, und wenn der Vergleich anzeigt, dass die verglichenen Adressdaten einander nicht entsprechen, Zugriffsrechte zum Benutzen der digitalen Aufzeichnung (21) in dem Endgerät (8) nicht vergeben werden und die Nachricht nicht übertragen wird.

7. Endgerät nach Anspruch 6, **dadurch gekennzeichnet, dass** das Endgerät (8) außerdem Mittel (12) zum Empfangen einer Autorisierungsnachricht bezüglich der Registrierung der Zahlung und Mittel (10) zum Vergeben von Zugriffsrechten auf die digitale Aufzeichnung (21) auf Grundlage der empfangenen Autorisierungsnachricht umfasst.

8. Endgerät nach Anspruch 7, **dadurch gekennzeichnet, dass** das Endgerät (8) mit einer Programmierschnittstelle (20) zur Übertragung von Adressdaten und Nachrichten zwischen dem Endgerät (8) und der digitalen Aufzeichnung (21) versehen ist.

## Revendications

1. Procédé pour utiliser un enregistrement numérique (21) dans un terminal (8) dans lequel procédé des droits d'accès sont acquis pour utiliser l'enregistrement numérique (21), où un message est formé dans le terminal (8) pour enregistrer le paiement pour les droits d'accès, lequel message est transmis à un destinataire prédéterminé, et que ledit destinataire examine le message transmis, dans lequel sur la base de l'examen les données de paiement se rapportant aux droits d'accès sont enregistrées, **caractérisé en ce que** une information concernant l'adresse dudit destinataire est stockée dans l'enregistrement numérique (21) et dans le terminal (8) et que les données d'adresse stockées dans le terminal (8) sont comparées aux données d'adresse stockées dans l'enregistrement numérique (21) dans le terminal (8) avant que ledit message ne soit transmis, dans lequel, si la comparaison indique que les données d'adresse comparées correspondent les unes aux autres, l'enregistrement numérique (21) peut être utilisé après la transmission dudit message, et si la comparaison indique que les données d'adresse comparées ne correspondent pas les unes aux autres, des droits d'accès ne sont pas donnés pour utiliser l'enregistrement numérique (21) dans le terminal (8) et ledit message n'est pas transmis.

2. Procédé selon la revendication 1, **caractérisé en ce qu'**un message d'autorisation de l'enregistrement du message est transmis depuis ledit destinataire vers ledit terminal, dans lequel l'enregistrement numérique peut être utilisé avec des droits d'accès se conformant au paiement après la réception dudit message d'autorisation.

3. Procédé selon la revendication 1 ou 2, **caractérisé en ce que** ledit message est un message court.

4. Procédé selon la revendication 1 ou 2, **caractérisé en ce que** ledit message est un message de radiomessagerie.

5. Procédé selon l'une quelconque des revendications 1 à 4, **caractérisé en ce que** l'enregistrement numérique inclut l'un de ce qui suit:
- une application,
- de la musique stockée dans un format numérique,
- un travail stocké dans un format numérique, ou
- un ticket d'entrée stocké dans un format numérique.

6. Terminal comprenant un moyen pour utiliser un enregistrement numérique, un moyen pour former un message afin d'acquérir le droit d'accès à l'enregistrement numérique (21), et un moyen (12) pour envoyer ledit message pour acquérir les droits d'accès à un destinataire prédéterminé qui est agencé pour être responsable de l'enregistrement des données de paiement se rapportant aux droits d'accès, **caractérisé en ce que** les données d'adresse du destinataire sont stockées dans l'enregistrement numérique (21) et dans le terminal (8) et que le terminal (8) comprend un moyen (10) pour comparer les données d'adresse stockées à l'adresse indiquée par les données d'adresse du destinataire stockées dans l'enregistrement numérique avant que ledit message ne soit transmis, dans lequel, si la comparaison indique que les données d'adresse comparées correspondent les unes aux autres, l'enregistrement numérique (21) peut être utilisé après la transmission dudit message, et si la comparaison indique que les données d'adresse comparées ne correspondent pas les unes aux autres, des droits d'accès ne sont pas donnés pour utiliser l'enregistrement numérique (21) dans le terminal (8) et ledit message n'est pas transmis.

7. Terminal selon la revendication 6, **caractérisé en ce que** le terminal (8) comprend également un moyen (12) pour recevoir un message d'autorisation se rapportant à l'enregistrement du paiement, et un moyen (10) pour donner des droits d'accès à l'enregistrement numérique (21) sur la base dudit message d'autorisation reçu.

8. Terminal selon la revendication 7, **caractérisé en ce que** le terminal (8) est pourvu d'une interface de programme d'application (20) pour le transfert de données d'adresse et de messages entre le terminal (8) et l'enregistrement numérique (21).
